# EUROPÄISCHE PATENTSCHRIFT

(11) **EP 1 374 505 B1**
(45) Veröffentlichungstag und Bekanntmachung des Hinweises auf die Patenterteilung: **31.10.2007**
(21) Anmeldenummer: 02757713.9
(22) Anmeldetag: 14.02.2002
(51) Int. Cl.: H04L 12/56

(54) **SCHALTUNGSANORDNUNG ZUR DATENSTROMVERTEILUNG MIT KONFLIKTAUFLÖSUNG**
CIRCUIT ARRANGEMENT FOR DATA STREAM DISTRIBUTION WITH CONFLICT RESOLUTION
CIRCUIT POUR LA REPARTITION DE COURANTS DE DONNEES AVEC RESOLUTION DES CONFLITS

(30) Priorität: 16.02.2001 DE 10107433
(43) Veröffentlichungstag der Anmeldung: 02.01.2004
(73) Patentinhaber: Infineon Technologies AG, 81669 München (DE)
(72) Erfinder: HEER, Christoph, 85579 Neubiberg (DE); KIRSTÄDTER, Andreas, 85560 Ebersberg (DE)
(74) Vertreter: Reinhard - Skuhra - Weise & Partner
(86) Internationale Anmeldenummer: PCT/EP2002/001578
(87) Internationale Veröffentlichungsnummer: WO 2002/080469

(56) Entgegenhaltungen:
- US-A- 5 687 324
- US-A- 5 745 489
- US-A- 5 862 128

## Beschreibung

Die vorliegende Erfindung betrifft eine Schaltungsanordnung und ein Verfahren zum Verteilen von Datenströmen mit Konfliktauflösung gemäß dem Oberbegriff des Anspruchs 1 bzw. 11, wie aus der US-A-5,745,489 bekannt.

Üblicherweise werden Schaltungsanordnungen zur Datenstromverteilung nach dem Prinzip der "Kreuzschienenverteilung" ausgelegt. Hierbei können Datenströme, die an einem oder mehreren Eingangsanschlüssen anliegen, zu einem oder mehreren Ausgangsanschlüssen weitergeleitet werden.

Neben diesem unidirektionalen Verfahren sind bidirektionale Verfahren bekannt, die es erlauben, dass Kreuzschienenverteiler-Anschlüsse sowohl als Eingänge als auch als Ausgänge fungieren. Die weiterzuschaltenden Datenströme - insbesondere Bitdatenströme - liegen in bekannten Protokollen vor, beispielsweise in dem bekannten Ethernet V2/IEEE 802.3-Protokoll. Insbesondere bei der bidirektionalen Datenstromübertragung von einem oder mehreren Ein-/Ausgängen zu einem oder mehreren Aus-/Eingängen kann es zu Konflikten kommen, da eine Übertragung von Elementen eines Datenstroms es ausschließt, dass genau gleichzeitig Elemente eines zweiten Datenstroms zu dem gleichen Ausgang bzw. von dem gleichen Eingang übertragen werden.

Somit sind große Anstrengungen unternommen worden, diese Ein-/Ausgabekonflikte zu beseitigen, wobei mehrere Verfahren zu dieser sogenannten "Konfliktauflösung" (Contentionresolution) vorgeschlagen worden sind.

Die DE 19540160 beschreibt ein Verfahren zur Koordination von eingangsgepufferten ATM-(Asynchroner Transfermodus)-Vermittlungseinrichtungen zur Vermeidung von Ausgangsblockierungen. Eine Kreuzschienen-Verteilermatrix arbeitet in einer vollständig parallelen Weise, d.h. sie schaltet während des gleichen Zeitintervalls mehrere Zellen von unterschiedlichen Eingängen zu unterschiedlichen Ausgängen. Da einzelne Paketübertragungen durch das System normalerweise völlig unabhängig voneinander sind, muß vermieden werden, daß eine Datenzelle zu dem gleichen Verteilerschienen-Matrixausgang während der gleichen Zellenschlitzdauer geschaltet wird.

Eine herkömmliche Konfliktauflösung (Contention Resolution) ist in der DE 19941851.9-31 beschrieben.

Vorrichtungen und Verfahren zur Konfliktauflösung führen beispielsweise folgende Hauptaufgaben aus:
(a) Durchführung einer Auswahl von Datenzellen, wobei für jede Datenzellendauer bestimmt werden muß, welche Datenzellen von welchen Eingängen zu einzelnen Kreuzschienenverteiler-Matrixausgängen zu schalten sind. Diese Teilaufgabe einer Konfliktauflösung löst mögliche Übertragungskonflikte mehrerer Eingänge, die auf den gleichen Verteilerschienenmatrix-Ausgang abzielen und weist eines oder mehrere der folgenden Merkmale auf:
   (i) Fairness: Sämtliche Eingänge, die auf den gleichen Ausgang gerichtet sind, müssen den gleichen Anteil am Gesamtdurchsatz erhalten;
   (ii) Hoher Durchsatz: Der Betrieb der Konfliktauflösung und ihrer Fairness-Algorithmen sollte einen Gesamtsystemdurchsatz so wenig wie möglich beeinträchtigen;
   (iii) Schnelle Betriebsweise: Da für jede Datenzellendauer eine neue Entscheidung berechnet werden muß, muß die Berechnungszeit, die erforderlich ist, geringer sein als eine Zellenschlitzzeit; und
   (iv) Einfache Implementierbarkeit: Die Konfliktauflösungseinheit muß als eine synchrone Endzustandsmaschine implementierbar sein, wobei keine asynchronen Teile durch die Datenstrom-Auslegungsregulationen zugelassen sind; und
(b) Puffereinrichtungen müssen bereitgestellt werden, um Datenzellen, die während der gegenwärtigen Datenzellendauer nicht weitergeschaltet werden, zu puffern, um sie zu einem späteren Zeitpunkt entsprechend weiterschalten zu können.

Beide Aufgaben "Auswahl" und "Puffern" sind somit für eine Datenstromverteilung von größter Bedeutung und müssen durch entsprechende Einrichtungen in der Schaltungsanordnung ausgeführt werden.

Die DE 19935126.0 beschreibt ein Kreuzschienenverteilerbasiertes System, das eine integrierte Konfliktauflösungseinheit enthält. Die Aufgabe einer Auswahl wird in einer Verteilereinrichtung selbst ausgeführt, während die Aufgabe eines Pufferns nach dem Stand der Technik in den Anschlußeinheiten ausgeführt wird.

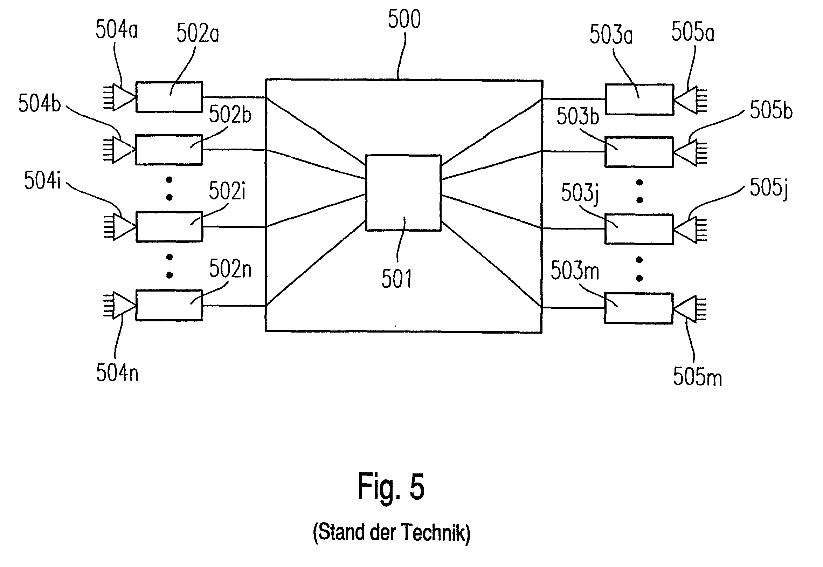

Fig. 5 zeigt eine Schaltungsanordnung zur Datenstromverteilung nach dem Stand der Technik, wobei mit der Ziffer "5" beginnende Bezugszeichen Elemente bezeichnen, wie sie in Schaltungsanordnungen zur Datenstromverteilung und Verfahren nach dem Stand der Technik auftreten. Eine oder mehrere Datenstromleitungen sind mit ersten Datenstromverbindungseinheiten 504a-504n verbunden. Ebenso sind eine oder mehrere Datenstromleitungen mit zweiten Datenstromverbindungseinheiten 505a-505m verbunden. Beide Datenstromverbindungseinheiten übertragen Daten zu und/oder Daten von entsprechenden ersten Anschlußeinheiten 502a-502n und zweiten Anschlußeinheiten 503a-503m. Somit dienen die ersten Anschlußeinheiten 502a-502n und die zweiten Anschlußeinheiten 503a-503m sowohl als Eingänge als auch als Ausgänge zu einer zentralen Verteilereinrichtung 500. Die ersten Anschlußeinheiten 502a-502n und die zweiten Anschlußeinheiten 503a-503m sind mit einer Matrixschalteinheit 501, die in der Verteilereinrichtung 500 enthalten ist, verbunden.

Für eine Konfliktauflösung ist es notwendig, daß die über erste und zweiten Datenstromverbindungseinheiten 504a-504n bzw. 505a-505m zugeführten Datenströme im gleichen Zellenzeitschlitz nicht gleichzeitig an eine einzige der entsprechenden Ausgangs-Anschlußeinheiten 502a - 502n bzw. 503a - 503m weitergeleitet werden. Aus diesem Grunde werden Daten in den ersten Anschlußeinheiten 502a-502n und in den zweiten Anschlußeinheiten 503a-503m gepuffert. Das Datenstromverteilungsverfahren nach dem Stand der Technik beruht darauf, daß Daten, die an eine gewünschte Anschlußeinheit nicht weitergegeben werden können, in der Anschlußeinheit, an welcher der entsprechende Datenstrom ankommt, gepuffert werden.

Die Information, ob eine entsprechende gewünschte Anschlußeinheit belegt ist oder nicht, wird in der Verteilereinrichtung 500 ermittelt, so daß relativ lange Informationswege zwischen den jeweiligen ersten und zweiten Anschlußeinheiten 502a - 502n bzw. 503a - 503m und der Matrixschalteinheit 501 bereitgestellt werden müssen, da eine Datenpufferung in den Anschlußeinheiten 502a - 502n bzw. 503a - 503m erfolgt. Lange Informationswege bedeuten eine große Zeitverzögerung, die ein Problem geringer Schaltzeiten mit sich bringt. Eine derartige Anordnung nach dem Stand der Technik ist beispielsweise auch in der DE 19935126.0 beschrieben.

Ein Hauptnachteil derartiger Schaltungsanordnungen zur Datenstromverteilung nach dem Stand der Technik besteht darin, daß lange Informationswege vorhanden sind, die wiederum die Schaltzeiten für die Datenströme verlängern.

Es ist ein weiterer Nachteil von Vorrichtungen und Verfahren zur Datenstromverteilung nach dem Stand der Technik, dass eine herkömmliche Konfliktauflösung die gesamte übertragbare Datenstrommenge begrenzt.

Es ist somit eine Aufgabe der vorliegenden Erfindung, eine Konfliktauflösung auf der Basis einer Auswahl der Dateneingangsströme und eines Pufferns nicht weitergeleiteter Dateneingangsströme bereitzustellen, wobei eine Datenstromverteilung nicht durch lange Informationswege zwischen Anschlusseinheiten und einer zentralen Matrixschalteinheit verzögert wird.

Die Aufgabe wird durch eine Schaltungsanordnung zur Datenstromverteilung mit Konfliktauflösung nach Anspruch 1 und durch ein Verfahren zum Verteilen von Datenströmen nach Anspruch 11 gelöst.

Die erfindungsgemäße Schaltungsanordnung nach Anspruch 1 und das erfindungsgemäße Verfahren nach Anspruch 11 weisen den Hauptvorteil auf, dass Datenströme effizient ohne Datenzellenverlust bei minimaler Verzögerung verteilt werden können.

Ein weiterer Vorteil der vorliegenden Erfindung besteht darin, dass eine flexible Anordnung entsprechender Verteilereinrichtungen ermöglicht wird, die es erlaubt, Anschlusseinheiten entfernt von einer Verteilereinrichtung zu ordnen, ohne Verzögerungszeiten bei einer Datenstromverteilung in Folge langer Informationswege zu erhalten.

Kern der Erfindung ist eine Schaltungsanordnung zur Datenstromverteilung, bei welcher Zwischenpuffereinheiten innerhalb einer Verteilereinrichtung angeordnet sind und bei welcher lange Informationswege vermieden werden, wobei durch ei ne Bereitstellung einer Rückstrominformation die Zwischenpuffereinheiten klein gehalten werden können.

In vorteilhafter Weise werden Informationen über eine Anschlußeinheit einer Verteilereinrichtung, die ebenfalls in einem Zellenkopf abgelegt sind, für eine Weiterverarbeitung schnell zur Verfügung gestellt.

In vorteilhafter Weise werden ferner Datenströme ohne Datenzellenverluste effektiv weitergeleitet, wobei Datenzellenverluste insbesondere durch ein Überschreiten von Pufferkapazitäten von Anschlußeinheiten vermieden werden.

Ferner ist es vorteilhaft, eine flexible Anordnung zur Verteilung von Datenströmen bereitzustellen.

In den Unteransprüchen finden sich vorteilhaften Weiterbildungen und Verbesserungen des jeweiligen Gegenstandes der Erfindung.

Gemäß einer bevorzugten Weiterbildung weist eine Matrixschalteinheit in einer Verteilereinrichtung 24 Eingänge und 24 Ausgänge auf.

Gemäß einer weiteren bevorzugten Weiterbildung der vorliegenden Erfindung werden Datenzellen derart zwischengepuffert, daß nie zwei Datenzellen gleichzeitig innerhalb des gleichen Zellenzeitschlitzes zur gleichen Anschlußeinheit übertragen werden.

Gemäß noch einer weiteren bevorzugten Weiterbildung der vorliegenden Erfindung wird ein Datenabgleich mit Pufferblöcken, die in ersten und/oder zweiten Anschlußeinheiten enthalten sind, durchgeführt.

Gemäß noch einer weiteren bevorzugten Weiterbildung der vorliegenden Erfindung weisen erste und zweite Datenstromverbindungseinheiten einen oder mehrere Anschlüsse für Datenleitungen auf.

Gemäß noch einer weiteren bevorzugten Weiterbildung der vorliegenden Erfindung werden Informationen einer Datenstromzelle, die in Datenstromrichtung fortläuft, hinsichtlich der in einem Verteilereinrichtung-Bestimmungsfeld und der in einem Anschlußeinheit-Bestimmungsfeld enthaltenen Informationen zu einer bestimmten Verteilereinrichtung und einer bestimmten Anschlußeinheit geleitet.

Gemäß noch einer weiteren bevorzugten Weiterbildung werden, wenn ein vorbestimmter Schwellwert bei Erreichen eines Zwischenpufferfüllstandes von Zwischenpuffereinheiten überschritten wird, Datengegenstromzellen gebildet, die in Datengegenstromrichtung laufen und ein Rückstau-Bestimmungsfeld sowie ein Rückstau-Bitvektorfeld enthalten.

Gemäß noch einer weiteren bevorzugten Weiterbildung der vorliegenden Erfindung sind die Zwischenpuffereinheiten klein ausgebildet, wodurch große Datendurchsätze ermöglicht werden. Derartige Datendurchsätze können in der Größenordnung von einigen 100 GB/s liegen.

Ausführungsbeispiele der Erfindung sind in den Zeichnungen dargestellt und in der nachfolgenden Beschreibung näher erläutert. In den Zeichnungen zeigen:
- Fig. 1: eine Schaltungsanordnung zur Datenstromverteilung mit Konfliktauflösung gemäß der vorliegenden Erfindung;
- Fig. 2: den Aufbau eines Datenstroms, mit welchem Anschlußeinheiten einer Schaltungsanordnung zur Datenstromverteilung gemäß Fig. 1 beaufschlagt werden;
- Fig. 3: den Aufbau einer Datenstromzelle, die in Datenstromrichtung läuft;
- Fig. 4: den Aufbau einer Datengegenstromzelle, die in Datengegenstromrichtung läuft; und
- Fig. 5: eine Schaltungsanordnung zur Datenstromverteilung nach dem Stand der Technik.

In den Figuren bezeichnen gleiche Bezugszeichen gleiche oder funktionsgleiche Komponenten.

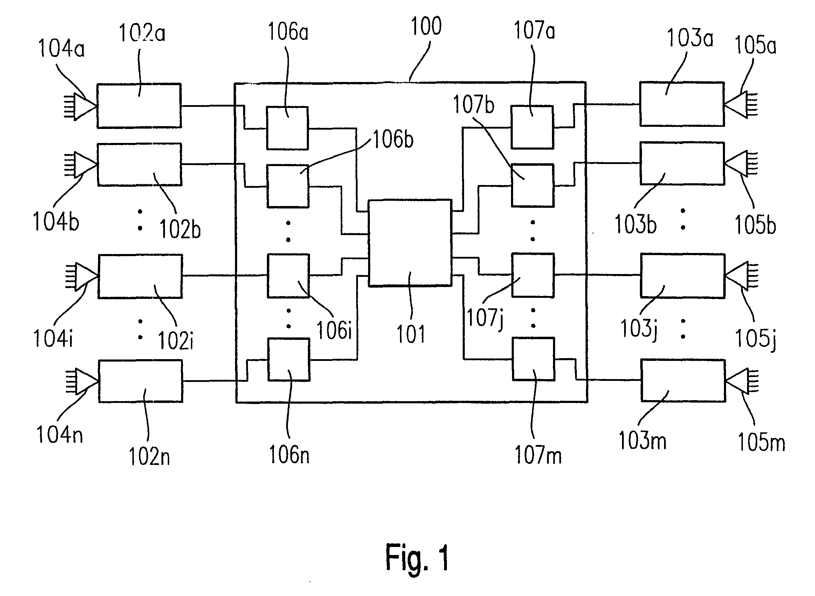

Fig. 1 veranschaulicht eine Schaltungsanordnung zur Datenstromverteilung mit Konfliktauflösung gemäß der vorliegenden Erfindung.

Bei der in Fig. 1 gezeigten Schaltungsanordnung zur Datenstromverteilung werden Datenströme ersten Datenstromverbindungseinheiten 104a-104n und zweiten Datenstromverbindungseinheiten 105a-105m zugeführt. Die erfindungsgemäße Schaltungsanordnung und das erfindungsgemäße Verfahren erlauben es, daß Datenströme bidirektional übertragen werden, so daß die ersten Datenstromverbindungseinheiten 104a-104n und die zweiten Datenstromverbindungseinheiten 105a-105m sowohl als Eingangs- als auch als Ausgangsanschlüsse dienen.

Beispielhaft sind in Fig. 1 vier erste Datenstromverbindungseinheiten 104a-104n und vier zweite Datenstromverbindungseinheiten 105a-105m gezeigt. Es sei jedoch darauf hingewiesen, daß zwei oder mehrere erste Datenstromverbindungseinheiten mit zwei oder mehreren zweiten Datenstromverbindungseinheiten verschaltet werden können, wobei i der Laufindex und n die Gesamtanzahl der ersten Datenstromverbindungseinheiten ist, während j der Laufindex und m die Gesamtzahl der zweiten Datenstromverbindungseinheiten ist.

Neben einer elektrischen Zuführung der zu verteilenden Datenströme sind im allgemeinen auch optische Zuführungen der zu verteilenden Datenströme zu den ersten und zweiten Datenstromverbindungseinheiten 104a-104n bzw. 105a-105m vorgesehen.

Eine Verteilereinrichtung 100 besteht im wesentlichen aus einer Matrixschalteinheit 101 und ersten Zwischenpuffereinheiten 106a-106n und zweiten Zwischenpuffereinheiten 107a-107m, wobei die Anzahl der ersten Zwischenpuffereinheiten 106a-106n der Anzahl der ersten Datenstromverbindungseinheiten 104a-104n entspricht, während die Anzahl der zweiten Zwischenpuffereinheiten 107a-107m der Anzahl der zweiten Datenstromverbindungseinheiten 105a-105m entspricht. Datenströme, die über die ersten Datenstromverbindungseinheiten 104a-104n zugeführt werden, werden über erste Anschlußeinheiten 102a-102n den ersten Zwischenpuffereinheiten 106a-106n zugeführt, während Datenströme, die zweiten Datenstromverbindungseinheiten 105-105m zugeführt werden, über zweite Anschlußeinheiten 103a-103m den zweiten Zwischenpuffereinheiten 107a-107m zugeführt werden.

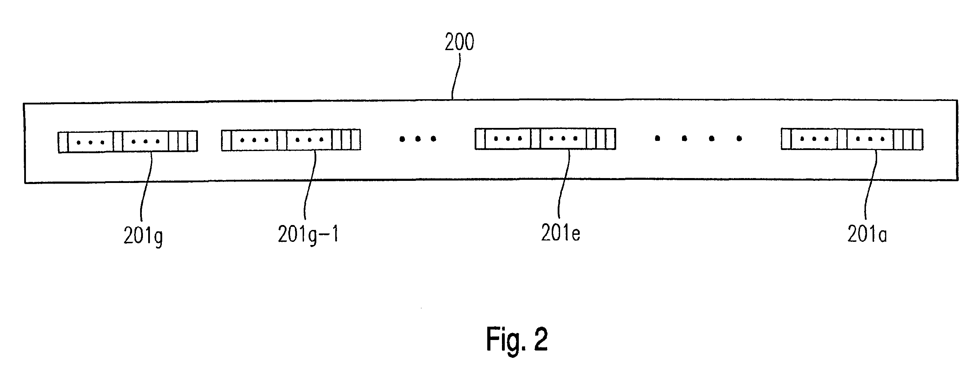

Die Datenströme werden in Datenzellen zerlegt, wie untenstehend unter Bezugnahme auf die Fig. 2 bis 4 beschrieben. Hierbei wird zunächst die Information im Zellenkopf ausgewertet, die, zusammen mit einer Information über eine Belegung von Zwischenpuffereinheiten bestimmt, ob eine aktuelle Datenstromzelle unmittelbar zu einer zugeordneten Ausgangs-Anschlußeinheit weitergeleitet wird, oder eine Datengegenstromzelle gebildet wird, die zu der entsprechenden Anschlußeinheit zurückverwiesen wird, um dort ausgewertet zu werden.

Fig. 2 zeigt den Aufbau eines Datenstroms, mit welchem Anschlußeinheiten einer Schaltungsanordnung zur Datenstromverteilung gemäß Fig. 1 beaufschlagt werden.

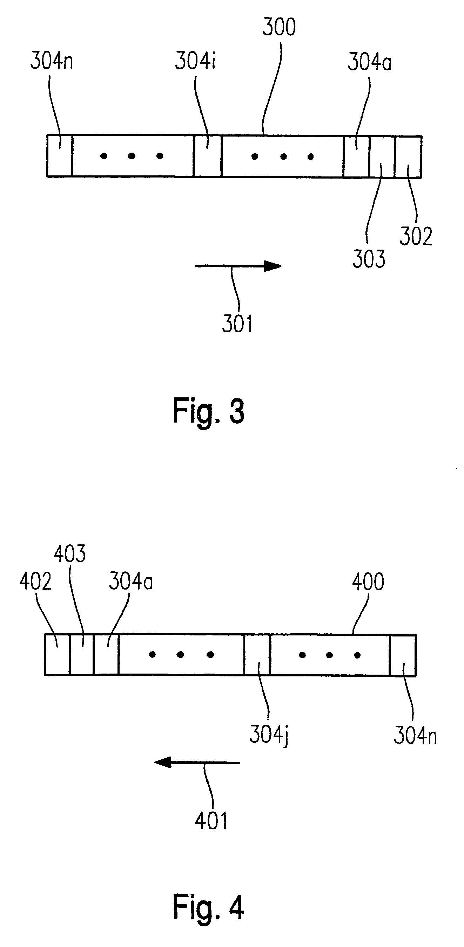

Der in Fig. 2 gezeigte Datenstrom 200 besteht aus Datenstromzellen 201a-201g, wobei k dem Laufindex und g der Gesamtzahl der Datenstromzellen entspricht. Die gezeigten Datenstromzellen entsprechen im allgemeinen Datenpaketen fester Länge. Die Datenstromzellen 201a-201g tragen die zu übermittelnde und in der erfindungsgemäßen Schaltungsanordnung zu verteilende Information, wobei ein Datenstrom-Zellenkopf spezifisch für eine Bestimmung von beispielsweise Anschlußeinheiten und Verteilereinrichtungen benutzt wird, wie untenstehend unter Bezugnahme auf die Fig. 3 und 4 beschrieben werden wird.

Fig. 3 verdeutlicht den Aufbau einer Datenstromzelle, die in Datenstromrichtung läuft.

Die in Fig. 3 gezeigte Datenstromzelle 300 breitet sich in Datenstromrichtung 301 aus und besteht aus einzelnen Feldern, die sich aus Feldern eines Zellenkopfes und Datenstrominformationsfeldern 304a - 304n (i = Laufindex) zusammensetzen. Ein Zellenkopf besteht aus einem Verteilereinrichtung-Bestimmungsfeld 302 und einem Anschlußeinheit-Bestimmungsfeld 303. Das Verteilereinrichtung-Bestimmungsfeld 302 bestimmt, welcher Verteilereinrichtung 100 die Datenstromzelle 300 zuzuführen ist, während das Anschlußeinheit-Bestimmungsfeld 303 festlegt, welcher Anschlußeinheit 102a-102n bzw. 103a-103m eine Datenstromzelle 300 innerhalb einer Verteilereinrichtung 100 zuzuführen ist.

Fig. 4 zeigt den Aufbau einer Datengegenstromzelle, die in Datengegenstromrichtung läuft.

In der in Fig. 4 gezeigten Datengegenstromzelle 400 wird angezeigt, ob ein Schwellwert überschritten wird, wodurch angezeigt wird, daß der Zwischenpufferfüllstand einer entsprechenden Zwischenpuffereinheit derart ist, daß keine weiteren Datenstromzellen zwischengepuffert werden können.

Die Datengegenstromzelle 400 breitet sich somit in einer Datengegenstromrichtung 401 aus, wobei der Zellenkopf jetzt im Gegensatz zu der in Fig. 3 veranschaulichten Datenstromzelle aus einem Rückstau-Bestimmungsfeld 402 und einem Rückstau-Bitvektorfeld 403 besteht. Das Rückstau-Bestimmungsfeld 402 zeigt an, daß ein Rückstau aufgrund einer Überfüllung einer entsprechenden Zwischenpuffereinheit besteht, während das Rückstau-Bitvektorfeld 403 anzeigt, daß die Verteilereinrichtung 100 nicht länger in der Lage ist, Zellen zu den entsprechenden Anschlußeinheiten von der Anschlußeinheit, die mit dem ursprünglichen Datenstrom beaufschlagt wurde, zu übertragen.

Durch die erfindungsgemäße Schaltungsanordnung zur Datenstromverteilung mit Konfliktauflösung und das erfindungsgemäße Verfahren ist es möglich, freien verfügbaren Speicherplatz im Chip-Raum der Verteilereinrichtung 100 effizient zu nutzen, indem vorhandene Puffereinrichtungen in kleine Zwischenpuffereinrichtungen verteilt werden, die Ausgangs-Anschlußeinheiten auf der Verteilereinrichtung 100 entsprechen. Somit wird eine benötigte Zeitdauer, um eine Kommunikation mit angeschlossenen Chipeinheiten aufrecht zu erhalten, beträchtlich reduziert.

Durch die Einführung von Datengegenstromzellen 400 wird gewährleistet, daß keine Information in einem Datenstrom 200 verloren geht und daß Übertragungsverzögerungen begrenzt werden. Weiterhin sammelt und verbreitet die Verteilereinrichtung Information über die Zustände von mit ihr verbundenen Chipeinheiten und verwendet die Information in dem Rückstau-Bitvektorfeld 403 der Datengegenstromzelle 400 dazu, diese Information weiterzuleiten.

Obwohl die vorliegende Erfindung vorstehend anhand bevorzugter Ausführungsbeispiele beschrieben wurde, ist sie darauf nicht beschränkt, sondern auf vielfältige Weise modifizierbar.

### Bezugszeichenliste

| | |
|---|---|
| 100 | Verteilereinrichtung |
| 101 | Matrixschalteinheit |
| 102a, ..., 102i, ... 102n | Erste Anschlußeinheiten (i = Laufindex, n = Gesamtanzahl) |
| 103a, ..., 103j, ... 103m | Zweite Anschlußeinheiten (j = Laufindex, m = Gesamtanzahl) |
| 104a, ..., 104i, ... 104n | Erste Datenstromverbindungseinheiten (i = Laufindex, n = Gesamtanzahl) |
| 105a, ..., 105j, ... 105m | Zweite Datenstromverbindungseinheiten (j = Laufindex, m = Gesamtanzahl) |
| 106a, ..., 106i, ... 106n | Erste Zwischenpuffereinheiten (i = Laufindex, n = Gesamtanzahl) |
| 107a, ..., 107j, ... 107m | Zweite Zwischenpuffereinheiten (j = Laufindex, m = Gesamtanzahl) |
| 200 | Datenstrom |
| 201a, ..., 201k, ... 201g | Datenstromzellen (k = Laufindex, g = Gesamtanzahl) |
| 300 | Datenstromzelle |
| 301 | Datenstromrichtung |
| 302 | Verteilereinrichtung-Bestimmungsfeld |
| 303 | Anschlußeinheit-Bestimmungsfeld |
| 304a, ..., 304i, ... 304n | Datenstrominformationsfelder (i = Laufindex, n = Gesamtanzahl) |
| 400 | Datengegenstromzelle |
| 401 | Datengegenstromrichtung |
| 402 | Rückstau-Bestimmungsfeld |
| 403 | Rückstau-Bitvektorfeld |
| 500 | Verteilereinrichtung (mit der Ziffer "5" beginnende Bezugszeichen bezeichnen Elemente nach dem Stand der Technik zur Beschreibung der Fig. 5) |
| 501 | Matrixschalteinheit |
| 502a, ..., 502i, ... 502n | Erste Anschlußeinheiten (i = Laufindex, n = Gesamtanzahl) |
| 503a, ..., 503j, ... 503m | Zweite Anschlußeinheiten (j = Laufindex, m = Gesamtanzahl) |
| 504a, ..., 504i, ... 504n | Erste Datenstromverbindungseinheiten (i = Laufindex, n = Gesamtanzahl) |
| 505a, ..., 505j, ... 505m | Zweite Datenstromverbindungseinheiten (j = Laufindex, m = Gesamtanzahl) |
| 506a, ..., 506i, ... 506n | Erste Zwischenpuffereinheiten (i = Laufindex, n = Gesamtanzahl) |
| 507a, ..., 507j, ... 507m | Zweite Zwischenpuffereinheiten (j = Laufindex, m = Gesamtanzahl) |

## Patentansprüche

1. Schaltungsanordnung zur Datenstromverteilung mit Konfliktauflösung mit
a) einer Verteilereinrichtung (100), welche aufweist
(i) eine Matrixschalteinheit (101);
(ii) erste Zwischenpuffereinheiten (106a - 106n); und
(iii) zweite Zwischenpuffereinheiten (107a - 107m);
b) erste Datenstromverbindungseinheiten (104a - 104n) zur Eingabe und/oder Ausgabe erster Datenströme;
c) zweite Datenstromverbindungseinheiten (105a - 105m) zur Eingabe und/oder Ausgabe zweiter Datenströme;
d) ersten Anschlusseinheiten (102a - 102n) zur Verbindung der ersten Datenstromverbindungseinheiten (104a - 104n) mit den ersten Zwischenpuffereinheiten (106a - 106n); und
e) zweiten Anschlusseinheiten (103a - 103m) zur Verbindung der zweiten Datenstromverbindungseinheiten (105a - 105m) mit den zweiten Zwischenpuffereinheiten (107a - 107m);
**dadurch gekennzeichnet, dass**
Datengegenstromzellen (400) vorgesehen sind, die in einer Datengegenstromrichtung (401) laufen, ein Rückstau-Bestimmungsfeld (402) und ein Rückstau-Bitvektorfeld (403) enthalten.

2. Schaltungsanordnung nach Anspruch 1, **dadurch gekennzeichnet, dass** eine Matrixschalteinheit in einer Verteilereinrichtung 24 Eingänge und 24 Ausgänge aufweist.

3. Schaltungsanordnung nach einem oder beiden der Ansprüche 1 und 2, **dadurch gekennzeichnet, dass** die ersten (104a - 104n) jeweils einen oder mehrere Anschlüsse für Datenleitungen aufweisen.

4. Schaltungsanordnung nach einem oder mehreren der Ansprüche 1 bis 3, **dadurch gekennzeichnet, dass** die zweiten Datenstromverbindungseinheiten (105a - 105m) jeweils einen oder mehrere Anschlüsse für Datenleitungen aufweisen.

5. Schaltungsanordnung nach einem oder mehreren der Ansprüche 1 bis 4, **dadurch gekennzeichnet, dass** optische Zuführungen der zu verteilenden Datenströme zu den ersten und zweiten Datenstromverbindungseinheiten (104a - 104n) bzw. (105a - 105m) bereitgestellt sind.

6. Schaltungsanordnung nach einem oder mehreren der Ansprüche 1 bis 5, **dadurch gekennzeichnet, dass** Datenyromzellen als Datenpakete fester Länge ausgelegt sind.

7. Schaltungsanordnung nach einem oder mehreren der Ansprüche 1 bis 6, **dadurch gekennzeichnet, dass** die Verteilereinrichtung als ein Router in einer Vermittlungseinrichtung bereitgestellt ist.

8. Schaltungsanordnung nach einem oder mehreren der Ansprüche 1 bis 7, **dadurch gekennzeichnet, dass** die ersten und zweiten Zwischenpuffereinheiten (106a - 106n, 107a - 107m) getrennt entsprechend Zielausgängen bereitgestellt sind.

9. Schaltungsanordnung nach einem oder mehreren der Ansprüche 1 bis 8, **dadurch gekennzeichnet, dass** die ersten und zweiten Zwischenpuffereinheiten (106a - 106n, 107a - 107m) entsprechend Prioritäten einer Datenstromverteilung bereitgestellt sind.

10. Schaltungsanordnung nach einem oder mehreren der Ansprüche 1 bis 9, **dadurch gekennzeichnet, dass** die ersten und zweiten Zwischenpuffereinheiten (106a - 106n, 107a - 107m) entsprechend Datenstromzellengrößen bereitgestellt sind.

11. Verfahren zum Verteilen von Datenströmen mit Konfliktauflösung mit den Schritten:
a) Eingeben und/oder Ausgeben erster Datenströme in und/oder aus erste(n) Datenstromverbindungseinheiten (104a - 104n);
b) Eingeben und/oder Ausgeben zweiter Datenströme in und/oder aus zweite(n) Datenstromverbindungseinheiten (105a - 105m);
c) Zwischenpuffern der ersten Datenströme in ersten Zwischenpuffereinheiten (106a - 106n);
d) Zwischenpuffern der zweiten Datenströme in zweiten Zwischenpuffereinheiten (107a - 107m); und
e) Verteilen der ersten und zweiten Datenströme in einer Verteilereinrichtung (100) derart, dass keine Datenstromkonflikte auftreten;
**dadurch gekennzeichnet, dass**
Datengegenstromzellen (400) gebildet werden, wenn ein vorbestimmter Schwellwert bei Erreichen eines Zwischenpufferfüllstandes einer spezifischen Zwischenpuffereinheit (106a - 106n, 107a - 107m) überschritten wird, die in Datengegenstromrichtung (401) laufen und ein Rückstau-Bestimmungsfeld (402) sowie ein Rückstau-Bitvektorfeld (403) enthalten.

12. Verfahren nach Anspruch 11, **dadurch gekennzeichnet, dass** Datenzellen derart zwischengepuffert werden, dass nie zwei batenzellen gleichzeitig innerhalb des gleichen Zellenzeitschlitzes zur gleichen Anschlusseinheit übertragen werden.

13. Verfahren nach einem oder beiden der Ansprüche 11 und 12, **dadurch gekennzeichnet, dass** ein Datenabgleich mit Pufferblöcken, die in ersten und/oder zweiten Anschlusseinheiten enthalten sind, durchgeführt wird.

14. Verfahren nach einem oder mehreren der Ansprüche 11 bis 13, **dadurch gekennzeichnet, dass** Informationen einer Datenstromzelle, die in Datenstromrichtung fortläuft, hinsichtlich der in einem Verteilereinrichtung-Bestimmungsfeld (302) und der in einem Anschlusseinheit-Bestimmungsfeld (303) enthaltenen Informationen zu einer bestimmten Verteilereinrichtung und einer bestimmten Anschlusseinheit geleitet werden.

## Claims

1. Circuit arrangement for data stream distribution with conflict resolution, having
a) a distributor device (100) which has
(i) a matrix switching unit (101);
(ii) first temporary-buffer units (106a - 106n); and
(iii) second temporary-buffer units (107a - 107m);
b) first data-stream connection units (104a - 104n) for inputting and/or outputting first data streams;
c) second data-stream connection units (105a - 105m) for inputting and/or outputting second data streams;
d) first access units (102a - 102n) for connecting the first data-stream connection units (104a - 104n) to the first temporary-buffer units (106a - 106n); and
e) second access units (103a - 103m) for connecting the second data-stream connection units (105a - 105m) to the second temporary-buffer units (107a - 107m);
**characterized in that**
opposing-data-stream cells (400) are provided which run in an opposing-data-stream direction (401) and contain a backpressure determination field (402) and a backpressure bit-vector field (403).

2. Circuit arrangement according to Claim 1, **characterized in that** a matrix switching unit in a distributor device has 24 inputs and 24 outputs.

3. Circuit arrangement according to one or both of Claims 1 and 2, **characterized in that** the first data-stream connection units (104a - 104n) each have one or more connections for data lines.

4. Circuit arrangement according to one or more of Claims 1 to 3, **characterized in that** the second data-stream connection units (105a - 105m) each have one or more connections for data lines.

5. Circuit arrangement according to one or more of Claims 1 to 4, **characterized in that** optical supply lines for the data streams which are to be distributed are provided for the first and second data-stream connection units (104a - 104n) and (105a - 105m).

6. Circuit arrangement according to one or more of Claims 1 to 5, **characterized in that** data-stream cells are in the form of data packets of fixed length.

7. Circuit arrangement according to one or more of Claims 1 to 6, **characterized in that** the distributor device is provided as a router in a switching center.

8. Circuit arrangement according to one or more of Claims 1 to 7, **characterized in that** the first and second temporary-buffer units (106a - 106n, 107a - 107m) are provided in isolation according to target outputs.

9. Circuit arrangement according to one or more of Claims 1 to 8, **characterized in that** the first and second temporary-buffer units (106a - 106n, 107a - 107m) are provided according to priorities for a data-stream distribution.

10. Circuit arrangement according to one or more of Claims 1 to 9, **characterized in that** the first and second temporary-buffer units (106a - 106n, 107a - 107m) are provided according to data-stream cell sizes.

11. Method for distributing data streams with conflict resolution, having the following steps:
a) first data streams are input into and/or output from first data-stream connection units (104a - 104n);
b) second data streams are input into and/or output from second data-stream connection units (105a - 105m);
c) the first data streams are temporarily buffered in first temporary-buffer units (106a - 106n);
d) the second data streams are temporarily buffered in second temporary-buffer units (107a - 107m); and
e) the first and second data streams are distributed in a distributor device (100) such that no data-stream conflicts arise;
**characterized in that**
opposing-data-stream cells (400) are formed, if a predetermined threshold value is exceeded upon reaching a temporary-buffer filling level for a specific temporary-buffer unit (106a - 106n, 107a - 107 m), which run in the opposing-data-stream direction (401) and contain a backpressure determination field (402) and a backpressure bit-vector field (403).

12. Method according to Claim 11, **characterized in that** data cells are temporarily buffered such that two data cells are never transmitted to the same access unit simultaneously within the same cell timeslot.

13. Method according to one or both of Claims 11 and 12, **characterized in that** data alignment with buffer blocks contained in first and/or second access units is performed.

14. Method according to one or more of Claims 11 to 13, **characterized in that** information in a data-stream cell, running on in the data-stream direction, regarding the information contained in a distributor-device determination field (302) and the information contained in an access-unit determination field (303) is routed to a particular distributor device and to a particular access unit.

## Revendications

1. Circuit de répartition de flux de données avec résolution de conflits, comportant :
a) un dispositif de répartition (100), qui est doté
(i) d'une unité de commutation matricielle (101) ;
(ii) de premières unités de mémorisation temporaires (106a à 106n) ; et
(iii) de deuxièmes unités de mémorisation temporaires (107a à 107m) ;
b) des premières unités de liaison de flux de données (104a à 104n) pour l'entrée et/ou la sortie de premiers flux de données ;
c) des deuxièmes unités de liaison de flux de données (105a à 105m) pour l'entrée et/ou la sortie de deuxièmes flux de données ;
d) des premières unités de raccordement (102a à 102n) pour la liaison des premières unités de liaison de flux de données (104a à 104n) avec les premières unités de mémorisation temporaires (106a à 106n) ; et
e) des deuxièmes unités de raccordement (103a à 103m) pour la liaison des deuxièmes unités de liaison de flux de données (105a à 105m) avec les deuxièmes unités de mémorisation temporaires (107a à 107m) ;
**caractérisé en ce que**
il est prévu des cellules de contre-flux de données (400), qui progressent dans un sens de contre-flux de données (401), qui contiennent un champ de définition de reflux (402) et un champ vectoriel de bits de reflux (403).

2. Circuit selon la revendication 1, **caractérisé en ce qu'**une unité de commutation matricielle dans une unité de répartition comporte 24 entrées et 24 sorties.

3. Circuit selon l'une ou les deux revendications 1 et 2, **caractérisé en ce que** les premières unités (104a à 104n) comportent chacune un ou plusieurs raccordements pour des lignes de transmission de données.

4. Circuit selon l'une ou plusieurs des revendications 1 à 3, **caractérisé en ce que** les deuxièmes unités de liaison de flux de données (105a à 105m) comportent chacune un ou plusieurs raccordements pour des lignes de transmission de données.

5. Circuit selon l'une ou plusieurs des revendications 1 à 4, **caractérisé en ce que** des amenées optiques des flux de données à répartir sont mises à disposition vers les premières et deuxièmes unités de liaison de flux de données (104a à 104n) et (105a à 105m) .

6. Circuit selon l'une ou plusieurs des revendications 1 à 5, **caractérisé en ce que** des cellules de flux de données sont conçues sous la forme de paquets de données de longueur fixe.

7. Circuit selon l'une ou plusieurs des revendications 1 à 6, **caractérisé en ce que** le dispositif de répartition est mis à disposition en tant que router dans un dispositif de communication.

8. Circuit selon l'une ou plusieurs des revendications 1 à 7, **caractérisé en ce que** les premières et deuxièmes unités de mémorisation temporaires (106a à 106n, 107a à 107m) sont mises à disposition séparément en fonction de sorties cibles.

9. Circuit selon l'une ou plusieurs des revendications 1 à 8, **caractérisé en ce que** les premières et deuxièmes unités de mémorisation temporaires (106a à 106n, 107a à 107m) sont mises à disposition en fonction de priorités d'une répartition de flux de données.

10. Circuit selon à l'une ou plusieurs des revendications 1 à 9, **caractérisé en ce que** les premières et deuxièmes unités de mémorisation temporaires (106a à 106n, 107a à 107m) sont mises à disposition en fonction de capacités de cellules de flux de données.

11. Procédé de répartition de flux de données avec résolution de conflits, comportant les phases :
a) entrée et/ou sortie de premiers flux de données dans et/ou hors de première(s) unités de liaison de flux de données (104a à 104n) ;
b) entrée et/ou sortie de deuxièmes flux de données dans et/ou hors de deuxième(s) unités de liaison de flux de données (105a à 105m) ;
c) mémorisation temporaire des premiers flux de données dans des premières unités de mémorisation temporaires (106a à 106n) ;
d) mémorisation temporaire des deuxièmes flux de données dans des deuxièmes unités de mémorisation temporaires (107a à 107m) ; et
e) répartition des premiers et deuxièmes flux de données dans un dispositif de répartition (100) de façon à éviter l'apparition de conflits de flux de données ;
**caractérisé en ce que**
des cellules de contre-flux de données (400) sont formées si une valeur de seuil prédéterminée est dépassée lors de l'atteinte d'un niveau de remplissage d'une unité spécifique de mémorisation temporaire (106a à 106n, 107a à 107m), qui progressent dans le sens de contre-flux de données (401), et contiennent un champ de définition de reflux (402) ainsi qu'un champ vectoriel de bits de reflux (403).

12. Procédé selon la revendication 11, **caractérisé en ce que** des cellules de données font l'objet d'une mémorisation temporaire de telle sorte que deux cellules de données ne soient jamais transmises simultanément à la même unité de raccordement à l'intérieur du même créneau temporel de cellule.

13. Procédé selon l'une ou les deux revendications 11 et 12, **caractérisé en ce qu'**une égalisation de données est effectuée avec des blocs tampons qui sont contenus dans des premières et/ou deuxièmes unités de raccordement.

14. Procédé selon l'une ou plusieurs des revendications 11 à 13, **caractérisé en ce que** des informations d'une cellule de flux de données, qui progresse dans le sens des flux de données, sont dirigées vers un certain dispositif de répartition et vers une certaine unité de raccordement, par rapport aux informations contenues dans un champ de définition (302) d'un dispositif de répartition, et à celles contenues dans un champ de définition (303) d'une unité de raccordement.
